# FASCICULE DE BREVET EUROPEEN

(11) **EP 3 122 578 B1**
(45) Date de publication et mention de la délivrance du brevet: **09.05.2018**
(21) Numéro de dépôt: 15710200.5
(22) Date de dépôt: 18.03.2015
(51) Int. Cl.: B60G 15/06, F16C 19/10

(54) **BUTÉE TOURNANTE ET JAMBE DE SUSPENSION ASSOCIÉE**
ROTATIONSANSCHLAG UND ZUGEHÖRIGES FEDERBEIN
ROTARY STOP AND ASSOCIATED SUSPENSION STRUT

(30) Priorité: 24.03.2014 FR 1452478
(43) Date de publication de la demande: 01.02.2017
(73) Titulaire: NTN-SNR Roulements, 74000 Annecy (FR)
(72) Inventeur: DE GUIBERT, Mathieu, 74960 Cran Gevrier (FR); DELARCHE, Sébastien, 74320 Sevrier (FR)
(74) Mandataire: Alatis
(86) Numéro de dépôt international: PCT/EP2015/055616
(87) Numéro de publication internationale: WO 2015/144507

(56) Documents cités:
- DE-A1-102010 025 372
- FR-A1- 2 793 732

## Description

### DOMAINE TECHNIQUE DE L'INVENTION

L'invention se rapporte à une butée tournante pour une jambe de suspension comportant un amortisseur télescopique et un ressort à boudin, permettant une rotation de la spire supérieure du ressort à boudin lors des déflexions de la jambe de suspension, et à une jambe de suspension comportant une telle butée. Elle se rapporte également à une jambe de suspension pourvue d'une telle butée.

### ÉTAT DE LA TECHNIQUE ANTÉRIEURE

Dans le document FR 2 839 471 est décrite une butée tournante pour une jambe de suspension destinée à être montée à la superstructure d'un véhicule, la jambe de suspension comportant un amortisseur télescopique et un ressort à boudin, la butée comprenant un palier à roulement comportant une rondelle supérieure fixe et une rondelle inférieure tournante. Un couvercle est interposé entre la rondelle supérieure et la superstructure du véhicule. La butée comporte en outre un support inférieur réalisé d'une pièce en matière plastique, présentant une paroi d'appui en appui contre la rondelle inférieure, interposée entre une spire supérieure du ressort à boudin et la rondelle inférieure, et une jupe de guidage du ressort à boudin, positionnée radialement à l'intérieur de la spire supérieure du ressort à boudin. Le couvercle comporte en outre un insert métallique formant une jupe intérieure s'étendant radialement à l'intérieur du palier pour y constituer une coupelle d'appui et de confinement d'une butée de choc en mousse polyuréthane. Cet insert métallique, qui sert à limiter les déformations de la butée de choc en matériau élastomère, alourdit et renchérit la structure de la butée. Le couvercle comporte en outre une jupe extérieure qui vient recouvrir le palier à roulement et est pourvu d'une lèvre radiale discontinue orientée radialement vers l'intérieur et qui vient s'encliqueter dans une rainure prévue à cet effet dans le support inférieur, assurant ainsi à la fois un chicanage d'étanchéité dynamique à l'entrée du palier à roulement, et une solidarisation axiale entre les différents éléments de la butée avant leur montage sur le véhicule. Cette disposition de l'accrochage augmente l'encombrement radial de la butée. De plus, il s'avère difficile de bien maîtriser l'élasticité de la lèvre nécessaire à son encliquetage avec un matériau plastique rigide, et en pratique, le choix de matériau pour le couvercle s'en trouve limité. De plus, le chicanage est parfois insuffisant pour garantir l'étanchéité.

Dans le document DE102010025372 est décrite une butée tournante pour une jambe de suspension destinée à être montée à la superstructure d'un véhicule, la jambe de suspension comportant un amortisseur télescopique et un ressort à boudin, la butée comprenant un palier lisse interposé entre un couvercle et un support inférieur. Une lèvre d'étanchéité assure une étanchéité statique entre le support inférieur tournant et le couvercle fixe radialement à l'extérieur du palier. Cette lèvre n'a pas de fonction de maintien de la butée avant son montage sur le véhicule. Le couvercle comporte en outre une jupe intérieure s'étendant à l'intérieur du support inférieur tournant et pourvu d'un relief faisant saillie radialement vers le support inférieur pour coopérer avec un relief du support inférieur et réaliser un encliquetage qui assure la cohésion des pièces de la butée avant leur montage sur le véhicule. Cette disposition des reliefs d'accrochage à l'intérieur du support inférieur nuit à la compacité radiale de la butée.

Dans le document FR2793732 est décrite une butée tournante pour une jambe de suspension destinée à être montée à la superstructure d'un véhicule, la jambe de suspension comportant un amortisseur télescopique, un tampon de choc et un ressort à boudin, la butée comprenant un palier à roulement, définissant un axe de rotation de la butée, interposé entre une masse élastomère fixe et un support inférieur tournant. Le support inférieur présente une paroi d'appui, en appui axial contre le palier, et destinée à être interposée axialement entre une spire supérieure du ressort à boudin et une bague inférieure du palier, et une jupe de guidage du ressort à boudin, destinée à être positionnée radialement à l'intérieur de la spire supérieure du ressort à boudin et à s'interposer radialement entre la spire supérieure du ressort à boudin et une jupe de rigidification de la bague inférieure. La masse élastomère est adhérisée à une face supérieure d'une bague supérieure du palier et destinée à être interposée entre le palier et la superstructure du véhicule. La bague supérieure du palier à roulement comporte une jupe intérieure qui s'étend radialement à l'intérieur de la bague intérieure, et présente à son extrémité libre u accrochage qui fait saillie radialement vers l'extérieur, en recouvrement radial avec un épaulement de la bague inférieure, pour assurer la cohésion du palier à roulement. Un autre accrochage est prévu entre la jupe de rigidification de la bague inférieure et la jupe de guidage du ressort à boudin, pour assurer la cohérence entre la bague inférieure du palier à roulement et le support inférieur. La pièce métallique constituant la bague inférieure est complexe et massive, de même que la pièce constituant la bague supérieure. De plus, la présence d'un épaulement sur la bague inférieure pour l'encliquetage ou le sertissage de la bague supérieure ajoute une contrainte dimensionnelle en direction radiale qui, pour un diamètre primitif de roulement donné, limite le volume intérieur disponible pour loger la tête d'amortisseur et le tampon de choc.

### EXPOSÉ DE L'INVENTION

L'invention vise à remédier aux inconvénients de l'état de la technique et à proposer une butée tournante combinant compacité, légèreté, rigidité et étanchéité, avec une fonction encliquetage pour la cohésion avant assemblage sur le véhicule.

Pour ce faire est proposé, selon un premier aspect de l'invention une butée tournante pour une jambe de suspension destinée à être montée à la superstructure d'un véhicule, la jambe de suspension comportant un amortisseur télescopique et un ressort à boudin, la butée comprenant un palier lisse ou à roulement, définissant un axe de rotation de la butée, interposé entre un couvercle fixe et un support inférieur tournant, le support inférieur présentant une paroi d'appui en appui contre le palier et destinée à être interposée axialement entre une spire supérieure du ressort à boudin et le palier, et une jupe de guidage du ressort à boudin, destinée à être positionnée radialement à l'intérieur de la spire supérieure du ressort à boudin, le couvercle présentant une paroi d'appui en appui contre le palier et destinée à être interposée entre le palier et la superstructure du véhicule, et une jupe intérieure qui s'étend radialement à l'intérieur du palier et de la jupe de guidage et présente une extrémité inférieure dépassant de la jupe de guidage et pourvue d'un accrochage élastique en saillie radialement vers l'extérieur et en recouvrement radial avec une extrémité inférieure de la jupe de guidage. L'accrochage élastique, qui peut être constitué par une collerette continue, ou de préférence par des crochets individuels répartis sur la circonférence de la jupe intérieure, assure la cohésion de la butée, sans augmenter l'encombrement radial.

Suivant un mode de réalisation, un espace est ménagé axialement entre l'accrochage élastique et une extrémité inférieure de la jupe de guidage pour recevoir une extrémité supérieure d'une manche de protection de l'amortisseur télescopique.

La jupe intérieure a vocation à constituer un volume d'expansion pour une butée de choc déformable en mousse de polyuréthane, et présente de préférence une face intérieure libre, de forme générale cylindrique. La butée de choc, disposée à l'intérieur du volume d'expansion, et, en l'absence de déformation, à distance de la face intérieure de la jupe intérieure, peut se déformer librement en sens radial, avant de venir au contact de la jupe intérieure qui constitue alors un cerclage confinant la butée de choc. Les contraintes sur la jupe intérieure du couvercle lors des chocs sont relativement faibles, puisque l'essentiel du choc est amorti par la déformation de la butée de choc avant son contact avec la jupe.

Le couvercle comporte de préférence au moins une jupe extérieure de protection située radialement à l'extérieur du palier et au moins partiellement en recouvrement axial avec la rondelle inférieure, pour protéger le palier. Le support inférieur comporte de préférence au moins une paroi annulaire en saillie axiale vers le couvercle et interposée radialement entre le palier et la jupe extérieure de protection, de manière à délimiter une perte de charge à l'entrée du palier. Le support inférieur et le couvercle sont de préférence conformés de manière à délimiter radialement à l'extérieur du palier un labyrinthe annulaire.

Suivant un mode de réalisation, un joint d'étanchéité est disposé entre la jupe extérieure de protection et le support inférieur.

Suivant un mode de réalisation la jupe intérieure du couvercle présente une extrémité supérieure ouverte permettant le passage d'une extrémité supérieure d'une tige de l'amortisseur télescopique. Cette ouverture permet également le cas échéant de positionner la butée de choc déformable en appui axial contre un bloc filtrant supérieur, interposé entre le couvercle et la superstructure du véhicule.

De préférence, le support inférieur est constitué d'une pièce en matière plastique rigide, avec ou sans insert métallique. De même, le couvercle est de préférence constitué d'une pièce en matière plastique rigide, avec ou sans insert métallique.

Le palier est de préférence un palier à roulement comportant une rondelle supérieure fixe en appui sous le couvercle, une rondelle inférieure tournante en appui sur le support inférieur, les rondelles définissant des chemins de roulement sur lesquels roulent des corps roulants.

Suivant un autre aspect de l'invention, celle-ci a trait à une jambe de suspension destinée à être montée à la superstructure d'un véhicule, la jambe de suspension comportant un amortisseur télescopique et un ressort à boudin, et une butée tournante telle que décrite précédemment, en appui direct ou indirect contre une extrémité supérieure du ressort à boudin.

La jambe comporte de préférence une butée de choc présentant une portion supérieure située radialement à l'intérieur de la jupe intérieure, un volume annulaire d'expansion vide étant délimité radialement entre la portion supérieure de la butée de choc et la jupe intérieure. Suivant un mode de réalisation, la jambe de suspension comporte également un bloc filtrant en appui sur le couvercle et destiné à être interposé entre le couvercle et la superstructure du véhicule, l'extrémité supérieure de la butée de choc étant en appui contre le bloc filtrant.

Suivant un mode de réalisation, la jambe de suspension peut en outre comporter une manche de protection de l'amortisseur télescopique, accrochée aux crochets élastiques.

Suivant un mode de réalisation, la jambe de suspension peut comporter une collerette en matériau élastomère interposée entre le ressort à boudin et le support inférieur.

Suivant un autre aspect de l'invention, celle-ci a trait à une jambe de suspension destinée à être montée à la superstructure d'un véhicule, la jambe de suspension comportant un amortisseur télescopique, une butée de choc déformable, un ressort à boudin, et une butée tournante comprenant un palier lisse ou à roulement, définissant un axe de rotation de la butée, interposé entre un couvercle fixe et un support inférieur tournant, le support inférieur présentant une paroi d'appui en appui contre le palier et destinée à être interposée axialement entre une spire supérieure du ressort à boudin et le palier, et une jupe de guidage du ressort à boudin, destinée à être positionnée radialement à l'intérieur de la spire supérieure du ressort à boudin, le couvercle présentant une paroi d'appui en appui contre le palier et destinée à être interposée entre le palier et la superstructure du véhicule, et une jupe intérieure qui s'étend radialement à l'intérieur du palier et de la jupe de guidage et présente une extrémité inférieure dépassant de la jupe de guidage. La butée de choc présente une portion supérieure située radialement à l'intérieur de la jupe intérieure, un volume annulaire d'expansion vide étant délimité radialement entre la portion supérieure de la butée de choc et la jupe intérieure, de telle sorte que la butée de choc est en mesure de se déformer radialement dans ce volume en cas de choc de faible amplitude, et de venir au contact de la jupe intérieure en cas de choc de plus forte amplitude. La jupe intérieure présente une face intérieure libre, de préférence de forme générale cylindrique, délimitant ce volume. Les contraintes sur la jupe intérieure du couvercle lors des chocs sont relativement faibles, puisque l'essentiel du choc est amorti par la déformation de la butée de choc avant son contact avec la jupe, de sorte qu'il n'est pas nécessaire de renforcer la jupe intérieure par un insert métallique. Le couvercle est donc de préférence sans insert métallique au niveau de la jupe intérieure, et peut le cas échéant être réalisé intégralement en plastique.

Suivant un mode de réalisation, la jambe de suspension comporte également un bloc filtrant en appui sur le couvercle et destiné à être interposé entre le couvercle et la superstructure du véhicule, l'extrémité supérieure de la butée de choc étant en appui contre le bloc filtrant.

Les caractéristiques de l'invention décrite en lien avec un mode de réalisation ont vocation à s'appliquer à tous les modes de réalisation compatibles.

### BRÈVE DESCRIPTION DES FIGURES

D'autres caractéristiques et avantages de l'invention ressortiront à la lecture de la description qui suit, en référence aux figures annexées, qui illustrent :
- la figure 1, une jambe de suspension suivant un premier mode de réalisation de l'invention;
- la figure 2, une butée tournante intégrée à la jambe de suspension de la figure 1;
- la figure 3, une jambe de suspension selon un autre mode de réalisation de l'invention;
- la figure 4, une butée tournante selon un autre mode de réalisation de l'invention.

Pour plus de clarté, les éléments identiques ou similaires sont repérés par des signes de référence identiques sur l'ensemble des figures.

### DESCRIPTION DÉTAILLÉE DE MODES DE RÉALISATION

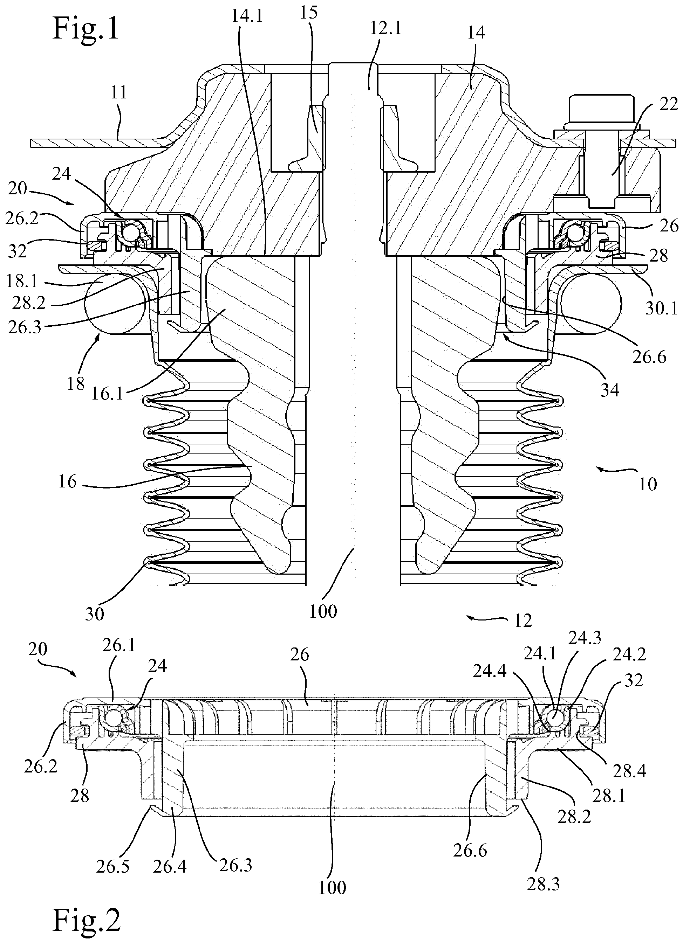

Sur la figure 1 est illustrée une jambe de suspension 10 montée à la superstructure 11 d'un véhicule. La jambe de suspension 10 est essentiellement composée d'un amortisseur télescopique 12 dont la tige 12.1 est fixée à un bloc filtrant 14 en matériau métallique et élastomère dense par l'intermédiaire d'un moyen de fixation 15 constitué ici par un écrou, d'une butée de choc 16 déformable en matériau élastomère emmanchée sur la tige 12.1 de l'amortisseur et en appui axial contre le bloc filtrant 14, d'un ressort à boudin 18 dont seule la spire d'extrémité 18.1 supérieure a été illustrée, et d'une butée tournante 20 interposée entre le ressort à boudin 18 et la superstructure 11 du véhicule pour guider une rotation de la spire supérieure 18.1 du ressort lors des déflexions de la jambe de suspension 10. Le bloc filtrant 14 constitue une interface entre les autres éléments de la jambe de suspension 10 et la superstructure 11 du véhicule, fixée à la superstructure 11 du véhicule par des moyens de fixation, constitués ici par des vis de fixation 22.

La butée tournante 20, illustrée en détail sur la figure 2, comprend un palier à roulement 24 définissant un axe de rotation 100 de la butée, ce palier étant interposé entre un couvercle fixe 26 et un support inférieur tournant 28. Le palier à roulement 24 est composé d'une rondelle supérieure fixe 24.1 en appui sous le couvercle 26, d'une rondelle inférieure tournante 24.2 en appui sur le support inférieur 28, les rondelles 24.4, 26.1 définissant des chemins de roulement sur lesquels roulent des corps roulants 24.3, en l'occurrence des billes, logés dans une cage de guidage 24.4. Les rondelles sont de préférence réalisées en métal embouti.

Le support inférieur 28 est constitué par une pièce annulaire en matériau plastique thermodurcissable, avec ou sans insert métallique. Cette pièce, à section axiale en L, présente une paroi d'appui 28.1 en appui contre le palier 24 et interposée axialement entre la spire supérieure 18.1 du ressort à boudin et le palier 24, et une jupe 28.2 pour le guidage radial de la spire supérieure 18.1 du ressort à boudin, cette jupe de guidage 28.2 étant positionnée radialement à l'intérieur de la spire supérieure 18.1 du ressort à boudin.

Une manche de protection 30 en accordéon permet d'éviter les intrusions de polluants au niveau de la tige 12.1 de l'amortisseur et de l'ouverture intérieure du palier 24. Cette manche 30 présente dans sa partie supérieure une collerette 30.1 qui est insérée entre la spire supérieure 18.1 du ressort à boudin et le support inférieur 28. Cette collerette 30.1 peut le cas échéant avoir une fonction de filtration des vibrations.

Le couvercle 26 présente une paroi d'appui 26.1, en appui contre la rondelle supérieure 24.1 du palier 24 et interposée entre le palier 24 et le bloc filtrant 14, une jupe extérieure de protection 26.2 située radialement à l'extérieur du palier 24 et au moins partiellement en recouvrement axial avec la rondelle inférieure 24.2, et une jupe intérieure 26.3 qui s'étend radialement à l'intérieur du palier 24 et de la jupe de guidage 28.2 et qui présente une extrémité inférieure 26.4 dépassant de la jupe de guidage et pourvue d'un rebord d'accrochage élastique 26.5 en saillie radialement vers l'extérieur et en recouvrement radial avec une extrémité inférieure 28.3 de la jupe de guidage 28.2. La jupe 26.3 présente une extrémité supérieure 26.8 largement ouverte, pour permettre le passage de la tige d'amortisseur 12.1 et la mise en appui direct, sur une surface de contact 14.1 importante, entre la portion supérieure 16.1 de la butée de choc 16 et le bloc filtrant 14. Cette surface de contact 14.1, de préférence plane, est ici située axialement en dessous du palier 24.

Un joint élastique 32 est logé dans une rainure radiale 28.4 du support inférieur 28 et en contact frottant contre la jupe extérieure 26.2 du couvercle 26.

La butée de choc 16 présente une portion supérieure 16.1 située radialement à l'intérieur de la jupe intérieure 26.3 en appui axial contre le bloc filtrant 14. Un volume annulaire d'expansion vide 34 est de préférence préservé entre la portion supérieure 16.1 de la butée de choc 16.1 dans son état non déformé et la jupe intérieure 26.3. La butée de choc 16 est ainsi en mesure de se déformer radialement dans ce volume 34 en cas de choc de faible amplitude, et de venir au contact de la jupe intérieure 26.3 en cas de choc de plus forte amplitude. La jupe intérieure 26.3 présente une face intérieure 26.6 libre, de préférence de forme générale cylindrique, délimitant ce volume 34. Les contraintes radiales sur la jupe intérieure 26.3 du couvercle lors des chocs sont relativement faibles, puisque l'essentiel du choc est amorti par la déformation de la butée de choc 16 avant son contact avec la jupe intérieure 26.3, de sorte qu'il n'est pas nécessaire de renforcer la jupe intérieure 26.3 par un insert métallique. Le couvercle 26 est donc de préférence sans insert métallique au niveau de la jupe intérieure 26.3, et peut le cas échéant être réalisé intégralement en plastique, de préférence en plastique thermodurcissable.

Lors de l'assemblage de la butée tournante 20, le palier à roulement 24 et le joint 32 sont positionnés sur le support inférieur 28, avant que le couvercle 26 soit inséré axialement dans la jupe de guidage 28.2 du support inférieur 28, cette insertion s'accompagnant d'un effacement de l'accrochage élastique 26.5 au passage dans la jupe de guidage 28.2, puis à d'une libération de cet accrochage élastique 26.5 qui retrouve sa forme non sollicitée après avoir débouché de l'extrémité inférieure 28.3 de la jupe de guidage. Dans cet état, et l'accrochage élastique 26.5 se trouve en interférence radiale avec la jupe de guidage 28.2 du support inférieur 28, et garantit la cohésion entre le couvercle 26, le palier 24 et le support inférieur 28.

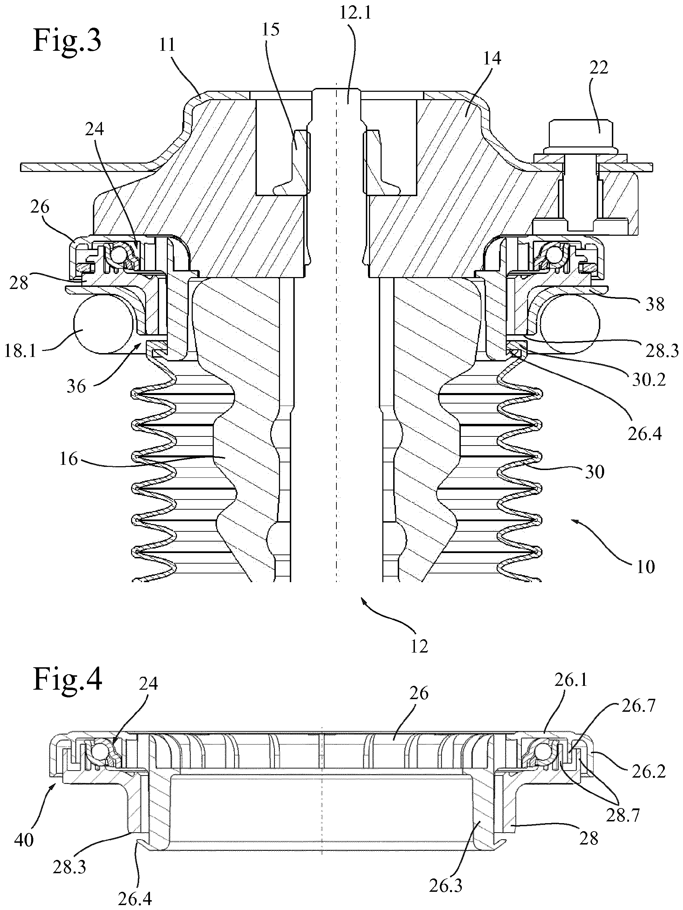

Sur la figure 3 est illustrée une variante qui ne diffère de la précédente que par le fait qu'un espace 36 est ménagé axialement entre l'accrochage élastique 26.5 et l'extrémité inférieure 28.3 de la jupe de guidage et est mis à profit pour recevoir une extrémité supérieure 30.2 de la manche de protection 30 de l'amortisseur télescopique. On peut alors prévoir, ou non, une collerette d'interface 38 entre la spire supérieure du ressort à boudin et le support inférieur, indépendante de la manche de protection 30.

Sur la figure 4 est illustrée une butée tournante 20 différant de celle de la figure 2 par la manière dont l'étanchéité est réalisée entre support inférieur 28 et couvercle 26 radialement à l'extérieur du palier à roulement 24. En l'occurrence, on a prévu sur le couvercle 26 et sur le support inférieur 28 des parois additionnelles 26.7, 28.7, qui définissent un labyrinthe 40 protégeant le palier 24 des pollutions extérieures. Dans l'exemple, une paroi cylindrique 26.7 du couvercle fait saillie vers le support inférieur 28, entre deux parois cylindriques 28.7 du support inférieur 28 qui font saillie vers le couvercle. Mais d'autres formes peuvent être adoptées pour définir le labyrinthe 40.

D'autres modifications peuvent naturellement être apportées. L'accrochage élastique 26.5 peut être constitué par des crochets individuels ou par un rebord saillant continu. Le palier 24 peut être un roulement à billes à contact oblique ou axial, un roulement à rouleaux ou à aiguilles, ou un palier lisse.

## Revendications

1. Butée tournante (20) pour une jambe de suspension (10) destinée à être montée à la superstructure (11) d'un véhicule, la jambe de suspension (10) comportant un amortisseur télescopique (12) et un ressort à boudin (18), la butée tournante (20) comprenant un palier (24) interposé entre un couvercle fixe (26) et un support inférieur tournant (28) et définissant un axe de rotation (100) de la butée tournante (20), le support inférieur (28) présentant une paroi d'appui (28.1) en appui contre le palier (24) et destinée à être interposée axialement entre une spire supérieure (18.1) du ressort à boudin (18) et le palier (24), et une jupe de guidage (28.2) du ressort à boudin (18), destinée à être positionnée radialement à l'intérieur de la spire supérieure (18.1) du ressort à boudin (18), le couvercle (26) présentant une paroi d'appui (26.1) en appui contre le palier (24) et destinée à être interposée entre le palier (24) et la superstructure (11) du véhicule, et une jupe intérieure (26.3) s'étendant radialement à l'intérieur du palier (24) et de la jupe de guidage (28.2), **caractérisée en ce que** la jupe intérieure (26.3) présente une extrémité inférieure (26.4) dépassant de la jupe de guidage (28.2) et pourvue d'un accrochage élastique (26.5) en saillie radialement vers l'extérieur et en recouvrement radial avec une extrémité inférieure (28.3) de la jupe de guidage (28.2).

2. Butée tournante (20) selon la revendication précédente, **caractérisée en ce qu'**un espace (36) est ménagé axialement entre l'accrochage élastique (26.5) et l'extrémité inférieure (28.3) de la jupe de guidage (28.2) pour recevoir une extrémité supérieure (30.2) d'une manche de protection (30) de l'amortisseur télescopique (12).

3. Butée tournante selon l'une quelconque des revendications précédentes, **caractérisée en ce que** la jupe intérieure (26.3) présente une face intérieure libre (26.6).

4. Butée tournante selon l'une quelconque des revendications précédentes, **caractérisée en ce que** le couvercle (26) comporte au moins une jupe extérieure de protection (26.2) située radialement à l'extérieur du palier (24) et au moins partiellement en recouvrement axial avec le palier (24).

5. Butée tournante selon la revendication précédente, **caractérisée en ce que** le support inférieur (28) comporte au moins une paroi annulaire (28.7) en saillie axiale vers le couvercle (26) et interposée radialement entre le palier (24) et la jupe extérieure de protection (26.2).

6. Butée tournante selon la revendication 4 ou la revendication 5, **caractérisée en ce qu'**un joint d'étanchéité (32) est disposé entre la jupe extérieure de protection (26.2) et le support inférieur (28).

7. Butée tournante selon l'une quelconque des revendications 4 à 6, **caractérisée en ce que** le support inférieur (28) et le couvercle (26) sont conformés de manière à délimiter un labyrinthe annulaire (40) radialement à l'extérieur du palier (24).

8. Butée tournante (20) selon l'une quelconque des revendications précédentes, **caractérisée en ce que** la jupe intérieure (26.3) du couvercle (26) présente une extrémité supérieure ouverte permettant le passage d'une extrémité supérieure d'une tige de l'amortisseur télescopique.

9. Butée tournante selon l'une quelconque des revendications précédentes, **caractérisée en ce que** le support inférieur (28) est constitué d'une pièce monobloc en matière plastique rigide avec ou sans insert métallique.

10. Butée tournante selon l'une quelconque des revendications précédentes, **caractérisée en ce que** le couvercle (26) est constitué d'une pièce monobloc en matière plastique rigide avec ou sans insert métallique.

11. Jambe de suspension (10) destinée à être montée à la superstructure d'un véhicule, la jambe de suspension (10) comportant un amortisseur télescopique (12) et un ressort à boudin (18), **caractérisée en ce qu'**elle comporte en outre une butée tournante (20) selon l'une quelconque des revendications précédentes, en appui direct ou indirect contre une extrémité supérieure (18.1) du ressort à boudin (18).

12. Jambe de suspension selon la revendication précédente, **caractérisée en ce qu'**elle comporte en outre une butée de choc (16) présentant une portion supérieure (16.1) située radialement à l'intérieur de la jupe intérieure (26.3),

13. Jambe de suspension selon la revendication précédente, **caractérisée en ce qu'**un volume annulaire d'expansion vide (34) est délimité radialement entre la portion supérieure (16.1) de la butée de choc (16) et la jupe intérieure (26.3).

14. Jambe de suspension selon l'une quelconque des revendications 12 ou 13, **caractérisée en ce qu'**elle comporte en outre un bloc filtrant (14) en appui sur le couvercle (26) et destiné à être interposé entre le couvercle (26) et la superstructure (11) du véhicule, la portion supérieure (16.1) de la butée de choc étant en appui contre le bloc filtrant (14).

15. Jambe de suspension selon l'une quelconque des revendications 11 à 14, **caractérisée en ce qu'**elle comporte en outre une manche de protection (30) de l'amortisseur télescopique, accrochée à l'accrochage élastique (26.5).

## Patentansprüche

1. Drehender Anschlag (20) für ein Federbein (10), welches dazu bestimmt ist, in den Aufbau (11) eines Fahrzeugs montiert zu werden, wobei das Federbein (10) einen teleskopartigen Stoßdämpfer (12) und eine Schraubenfeder (18) aufweist, und der drehende Anschlag (20) ein Lager (24) zwischen einer feststehenden Kappe (26) und einer rotierenden unteren Halterung (28) umfasst und eine Drehachse (100) des drehenden Anschlags (20) begrenzt, wobei die untere Halterung (28) eine am Lager (24) anliegende Stützwand (28.1) enthält, die dazu bestimmt ist, axial zwischen eine obere Windung (18.1) der Schraubenfeder (18) und das Lager (24) positioniert zu werden, und eine Führungsschürze (28.2) der Schraubenfeder (18), die dazu bestimmt ist, radial in die obere Windung (18.1) der Schraubenfeder (18) positioniert zu werden, wobei die Kappe (26) eine am Lager (24) anliegende Stützwand (26.1) umfasst, die dazu bestimmt ist, zwischen das Lager (24) und den Aufbau (11) des Fahrzeugs positioniert zu werden, und eine innere Schürze (26.3), die sich radial im Innern des Lagers (24) und der Führungsschürze (28.2) erstreckt, **dadurch gekennzeichnet, dass** die innere Schürze (26.3) ein unteres Ende (26.4) aufweist, dass über die Führungsschürze (28.2) hinausragt und mit einer radial nach außen vorstehenden elastischen Befestigungsvorrichtung (26.5) versehen ist, die ein unteres Ende (28.3) der Führungsschürze (28.2) radial überdeckt.

2. Drehender Anschlag (20) nach dem vorhergehenden Anspruch, **dadurch gekennzeichnet, dass** zwischen der elastischen Befestigungsvorrichtung (26.5) und dem unteren Ende (28.3) der Führungsschürze (28.2) axial ein Raum (36) zur Aufnahme eines oberen Endes (30.2) einer Schutzmanschette (30) des teleskopartigen Stoßdämpfers (12) ausgestaltet ist.

3. Drehender Anschlag nach einem der vorhergehenden Ansprüche, **dadurch gekennzeichnet, dass** die innere Schürze (26.3) eine freie Innenseite (26.6) aufweist.

4. Drehender Anschlag nach einem der vorhergehenden Ansprüche, **dadurch gekennzeichnet, dass** die Kappe (26) mindestens eine äußere Schutzschürze (26.2) aufweist, die sich radial an der Außenseite des Lagers (24) befindet und axial mindestens teilweise das Lager (24) überdeckt.

5. Drehender Anschlag nach dem vorhergehenden Anspruch, **dadurch gekennzeichnet, dass** die untere Halterung (28) mindestens eine ringförmige Wand (28.7) aufweist, die axial zur Kappe (26) hin vorsteht und radial zwischen dem Lager (24) und der äußeren Schutzschürze (26.2) angeordnet ist.

6. Drehender Anschlag nach Anspruch 4 oder Anspruch 5, **dadurch gekennzeichnet, dass** eine Dichtung (32) zwischen der äußeren Schutzschürze (26.2) und der unteren Halterung (28) angeordnet ist.

7. Drehender Anschlag nach einem der Ansprüche 4 bis 6, **dadurch gekennzeichnet, dass** die untere Halterung (28) und die Kappe (26) derart ausgestaltet sind, dass sie an der Außenseite des Lagers (24) ein ringförmiges Labyrinth (40) radial begrenzen.

8. Drehender Anschlag (20) nach einem der vorhergehenden Ansprüche, **dadurch gekennzeichnet, dass** die innere Schürze (26.3) der Kappe (26) ein oberes offenes Ende aufweist, durch welches ein oberes Ende einer Stange des teleskopartigen Stoßdämpfers geführt werden kann.

9. Drehender Anschlag nach einem der vorhergehenden Ansprüche, **dadurch gekennzeichnet, dass** die untere Halterung (28) aus einem einstückigen Teil aus steifem Kunststoff mit oder ohne metallischen Einsatz besteht.

10. Drehender Anschlag nach einem der vorhergehenden Ansprüche, **dadurch gekennzeichnet, dass** die Kappe (26) aus einem einstückigen Teil aus steifem Kunststoff mit oder ohne metallischen Einsatz besteht.

11. Federbein (10), welches dazu bestimmt ist, in den Aufbau eines Fahrzeugs montiert zu werden, wobei das Federbein (10) einen teleskopartigen Stoßdämpfer (12) und eine Schraubenfeder (18) umfasst, **dadurch gekennzeichnet, dass** es des Weiteren einen drehenden Anschlag (20) nach einem der vorhergehenden Ansprüche aufweist, der direkt oder indirekt an einem oberen Ende (18.1) der Schraubenfeder (18) anliegt.

12. Federbein nach dem vorhergehenden Anspruch, **dadurch gekennzeichnet, dass** es des Weiteren einen Stoßanschlag (16) aufweist, welcher einen oberen Abschnitt (16.1) umfasst, der radial im Innern der inneren Schürze (26.3) angeordnet ist.

13. Federbein nach dem vorhergehenden Anspruch, **dadurch gekennzeichnet, dass** ein ringförmiges leeres Ausdehnungsvolumen (34) radial zwischen dem oberen Abschnitt (16.1) des Stoßanschlags (16) und der inneren Schürze (26.3) begrenzt wird.

14. Federbein nach einem der Ansprüche 12 oder 13, **dadurch gekennzeichnet, dass** es des Weiteren einen Filterblock (14) umfasst, der an der Kappe (26) anliegt und dazu bestimmt ist, zwischen der Kappe (26) und dem Aufbau (11) des Fahrzeugs angeordnet zu werden, wobei der obere Abschnitt (16.1) des Stoßanschlags am Filterblock (14) anliegt.

15. Federbein nach einem der Ansprüche 11 bis 14, **dadurch gekennzeichnet, dass** es des Weiteren eine Schutzmanschette (30) des teleskopartigen Stoßdämpfers umfasst, die an der elastischen Befestigungsvorrichtung (26.5) befestigt ist.

## Claims

1. A rotary stop (20) for a suspension strut (10) intended to be mounted on the superstructure (11) of a vehicle, with the suspension strut (10) comprising a telescopic damper (12) and a coil spring (18), with the rotary stop (20) including a bearing (24) inserted between a stationary cover (26) and a rotary lower mounting (28) and defining an axis of rotation (100) of the rotary stop (20), with the lower mounting (28) having a bearing wall (28.1) resting against the bearing (24) and intended to be inserted axially between an upper turn (18.1) of the coil spring (18) and the bearing (24), and a skirt (28.2) for guiding the coil spring (18), intended to be positioned radially inside the upper turn (18.1) of the coil spring (18), with the cover (26) having a bearing wall (26.1) resting against the bearing (24) and intended to be inserted between the bearing (24) and the superstructure (11) of the vehicle, and an inner skirt (26.3) extending radially inside the bearing (24) and the guiding skirt (28.2), **characterized in that** the inner skirt (26.3) has a lower end (26.4) projecting beyond the guiding skirt (28.2) and provided with a resilient anchorage (26.5) projecting radially outwardly and radially overlapping with a lower end (28.3) of the guiding skirt (28.2).

2. A rotary stop (20) according to the preceding claim, **characterized in that** a space (36) is axially provided between the resilient anchorage (26.5) and the lower end (28.3) of the guiding skirt (28.2) to receive an upper end (30.2) of a protection sleeve (30) of the telescopic damper (12).

3. A rotary stop (20) according to any one of the preceding claims, **characterized in that** the inner skirt (26.3) has a free inner face (26.6).

4. A rotary stop (20) according to any one of the preceding claims, **characterized in that** the cover (26) includes at least one protection outer skirt (26.2) positioned radially outside the bearing (24) and at least partially axially overlapping the bearing (24).

5. A rotary stop (20) according to the preceding claim, **characterized in that** the lower mounting (28) includes at least one annular wall (28.7) axially projecting towards the cover (26) and radially inserted between the bearing (24) and the protection outer skirt (26.2).

6. A rotary stop (20) according to claim 4 or claim 5, **characterized in that** a sealing (32) is positioned between the protection outer skirt (26.2) and the lower mounting (28).

7. A rotary stop (20) according to any one of claims 4 to 6, **characterized in that** the lower mounting (28) and the cover (26) are so conformed as to define an annular labyrinth (40) radially outside the bearing (24).

8. A rotary stop (20) according to any one of the preceding claims, **characterized in that** the inner skirt (26.3) of the cover (26) has an open upper end enabling the passage of one upper end of a rod of the telescopic damper.

9. A rotary stop (20) according to any one of the preceding claims, **characterized in that** the lower mounting (28) consists of a single-piece part made of a rigid plastic material with or without a metal insert.

10. A rotary stop (20) according to any one of the preceding claims, **characterized in that** the cover (26) consists of a single-piece part made of a rigid plastic material with or without a metal insert.

11. A suspension strut (10) intended to be mounted on the superstructure of a vehicle, with the suspension strut (10) including a telescopic damper (12) and a coil spring (18), **characterized in that** it further includes a rotary stop (20) according to any one of the preceding claims, directly or indirectly resting against an upper end (18.1) of the coil spring (18).

12. A suspension strut according to the preceding claim, **characterized in that** it further includes an impact stop (16) having an upper portion (16.1) positioned radially inside the inner skirt (26.3).

13. A suspension strut according to the preceding claim, **characterized in that** a free annular expansion space (34) is radially defined between the upper portion (16.1) of the impact stop (16) and the inner skirt (26.3).

14. A suspension strut according to any one of claims 12 or 13, **characterized in that** it further includes a filter block (14) resting on the cover (26) and intended to be inserted between the cover (26) and the superstructure (11) of the vehicle, with the upper portion (16.1) of the impact stop resting against the filter block (14).

15. A suspension strut according to any one of claims 11 to 14, **characterized in that** it further includes a sleeve (30) for protecting the telescopic damper attached to the resilient anchorage (26.5).
